# EUROPÄISCHE PATENTANMELDUNG

(11) **EP 2 599 681 A2**
(43) Veröffentlichungstag der Anmeldung: **05.06.2013**
(21) Anmeldenummer: 13157197.8
(22) Anmeldetag: 21.09.2010
(51) Int. Cl.: B61D 17/02

(54) **Fahrzeugkomponente mit einem Strömungsleitelement**

(30) Priorität: 10.09.2010 DE 102010044933; 19.09.2010 DE 102010045631
(62) Teilanmeldung aus: 10178087.2
(71) Anmelder: Bombardier Transportation GmbH, 10785 Berlin (DE)
(72) Erfinder: Schober, Martin, 14089 Berlin (DE); Orellano, Alexander, 13629 Berlin (DE); Tietze, Andreas, 13595 Berlin (DE); Blaschko, René, 10119 Berlin (DE)
(74) Vertreter: Cohausz & Florack

(57) **Zusammenfassung**

Die vorliegende Erfindung betrifft eine Fahrzeugkomponente für ein Fahrzeug, insbesondere ein Schienenfahrzeug für den Hochgeschwindigkeitsverkehr, mit einer Oberfläche (102.1), die im Betrieb einer fahrtwindbedingten Luftströmung mit einer lokalen Hauptströmungsrichtung (111) ausgesetzt ist, wobei die Oberfläche (102.1) einen Ablösebereich (107) aufweist, in dem sich die Luftströmung von der Oberfläche (102.1) ablöst, und wenigstens ein dem Ablösebereich (107) zugeordnetes Störelement (115) vorgesehen ist, welches zum Einbringen einer Störung in die Luftströmung ausgebildet ist. Das Störelement (115) weist wenigstens eine in die Luftströmung hineinragende Leitfläche (115.1) auf, wobei die Leitfläche (115.1) derart ausgebildet und um einen Neigungswinkel zur lokalen Hauptströmungsrichtung (111) geneigt angeordnet ist, dass sie dem auf die Leitfläche (115.1) auftreffenden Teil der Luftströmung eine quer zur lokalen Hauptströmungsrichtung (111) verlaufende Geschwindigkeitskomponente aufprägt, die stromabwärts des Störelements (115) eine Verwirbelung in der Luftströmung induziert.

## Beschreibung

Die vorliegende Erfindung betrifft eine Fahrzeugkomponente für ein Fahrzeug, insbesondere ein Schienenfahrzeug für den Hochgeschwindigkeitsverkehr, mit einer Oberfläche, die im Betrieb einer fahrtwindbedingten Luftströmung mit einer lokalen Hauptströmungsrichtung ausgesetzt ist, wobei die Oberfläche einen Ablösebereich aufweist, in dem sich die Luftströmung von der Oberfläche ablöst, und wenigstens ein dem Ablösebereich zugeordnetes Störelement vorgesehen ist, welches zum Einbringen einer Störung in die Luftströmung ausgebildet ist. Die Erfindung betrifft weiterhin ein Fahrzeug mit einer derartigen Fahrzeugkomponente.

Bei modernen Schienenfahrzeugen mit vergleichsweise hohen Nennbetriebsgeschwindigkeiten besteht in der Regel das Problem, dass es an bestimmten Stellen am Fahrzeug, an denen sich die Strömung von den dort angeordneten Fahrzeugkomponenten ablöst, gerade bei hohen Geschwindigkeiten zu erheblichen Geräuschemissionen kommt. Dies liegt unter anderem daran, dass stromabwärts des Ablösepunktes eine sich kontinuierlich aufweitende Scherschicht entsteht. In dieser Scherschicht kommt es in der Regel zur periodischen Ausbildung von ausgeprägten Wirbeln (so genannte Kelvin-Helmholtz-Instabilität) und der damit einhergehenden Schallemission.

Eine derartige Strömungsablösung mit den beschriebenen Effekten ereignet sich an einer Vielzahl von unterschiedlichen Komponenten des Fahrzeugs. So kommt es beispielsweise natürlich besonders bei vom Fahrzeug hervorstehenden Komponenten, wie insbesondere einem Stromabnehmer oder dergleichen, zu der beschriebenen Schallemission. Ebenso sind aber auch Bereiche des Wagenkastens, des Fahrwerks oder anderer Anbauteile (wie Dachcontainer etc.) von diesem Effekt betroffen.

Das Dokument EP 2 106 983 A2 schlägt im Zusammenhang mit der sich am vorlaufenden Ende eines Fahrwerksausschnitts ablösenden Strömung vor, im Bereich der Strömungsabrisskante Turbulatoren vorzusehen, welche in Fahrzeugquerrichtung verteilt sind und dazu dienen sollen, eine Vielzahl kleinerer Verwirbelungen in die Scherschicht einzubringen, um die periodische Ausbildung der oben beschriebenen Wirbel zumindest weit gehend zu unterdrücken. Die Turbulatoren können dabei sowohl durch eine stark aufgeraute Oberfläche als auch durch vergleichsweise groß ausgeprägte, in Fahrzeuglängsrichtung und damit in Richtung der lokalen Hauptströmungsrichtung ausgerichtete zinnenartige Vorsprünge in der Außenhaut des Wagenkastens gebildet sein. Die zinnenartigen Vorsprünge können ihrerseits wiederum durch auf die Außenhaut aufgesetzte prismatische Elemente oder entsprechende Einkerbungen in der Außenhaut des Wagenkastens ausgebildet sein.

Die primär beschriebene Gestaltung mit den Einkerbungen in der Außenhaut des Wagenkastens ermöglicht es zwar, durch eine gewisse Erhöhung der Turbulenz in der Scherschicht die Ausbildung periodischer Wirbel und die damit einhergehende Geräuschemission zu reduzieren. Sie bringt jedoch den Nachteil mit sich, dass sich die Scherschicht in Fahrzeughöhenrichtung vergleichsweise schnell bzw. stark aufweitet, sodass sich zum einen eine vergleichsweise große Aufprallfläche der Scherschicht auf nachlaufende Fahrzeugkomponenten (wie das Fahrwerk oder in die nachlaufende Begrenzungswand des Fahrwerksausschnitts) mit der damit einhergehenden insoweit verstärkten Schallemission ergibt. Zum anderen erhöht eine derart stark aufgeweitete Scherschicht natürlich den Strömungswiderstand der betreffenden Fahrzeugkomponente und damit des gesamten Fahrzeugs erheblich.

Der vorliegenden Erfindung liegt daher die Aufgabe zu Grunde, eine Fahrzeugkomponente der eingangs genannten Art zur Verfügung zu stellen, welche die oben genannten Nachteile nicht oder zumindest in geringerem Maße mit sich bringt und insbesondere auf einfache Weise eine Reduktion der Schallemission des Fahrzeugs ohne nennenswerte Erhöhung des Strömungswiderstandes ermöglicht.

Die vorliegende Erfindung löst diese Aufgabe ausgehend von einer Fahrzeugkomponente gemäß dem Oberbegriff des Anspruchs 1 durch die im kennzeichnenden Teil des Anspruchs 1 angegebenen Merkmale.

Der vorliegenden Erfindung liegt die technische Lehre zu Grunde, dass man auf einfache Weise eine Reduktion der Schallemission des Fahrzeugs im Bereich bestimmter, einer Luftströmung ausgesetzter Fahrzeugkomponenten erzielt, ohne den Strömungswiderstand nennenswert zu erhöhen, wenn das Störelement eine zur lokalen Hauptströmungsrichtung geneigt angeordnete Leitfläche aufweist, welche den darauf auftreffenden Teil der Luftströmung quer zur lokalen Hauptströmungsrichtung derart ablenkt, dass stromabwärts des Störelements eine Verwirbelung in der Luftströmung induziert wird. Diese zur lokalen Hauptströmungsrichtung geneigt angeordnete Leitfläche hat gegenüber den bekannten Gestaltungen mit ihren parallel zur lokalen Hauptströmungsrichtung ausgerichteten Leitflächen den Vorteil, dass die gewünschte Turbulenz in der Scherschicht zuverlässig und unmittelbar durch die Querablenkung eines Teils der Strömung quer zur lokalen Hauptströmungsrichtung erzielt wird. Dies gilt insbesondere über einen breiten Fahrgeschwindigkeitsbereich bis hinunter zu vergleichsweise geringen Fahrgeschwindigkeiten.

Weiterhin ist es hiermit möglich, die Einleitung der Turbulenz über einen größeren Bereich räumlich konzentriert zu gestalten, indem beispielsweise die nachlaufenden Enden mehrerer Leitflächen entsprechend räumlich konzentriert (beispielsweise auf einer gemeinsamen Linie) angeordnet werden. Dies ist insofern von Vorteil als hiermit die Aufweitung der Scherschicht und der damit einhergehende Strömungswiderstand gering gehalten werden kann.

Schließlich ist es auch durch die geeignete Wahl der Ausrichtung der Neigung zur lokalen Hauptströmungsrichtung möglich, die Aufweitung der Scherschicht und den damit einhergehenden Strömungswiderstand gering zu halten. So kann die Querablenkung des jeweiligen Teils der Strömung in der Haupterstreckungsebene der Scherschicht erfolgen, wodurch die senkrecht zur Haupterstreckungsebene der Scherschicht in die Scherschicht eingeleitete Strömungsenergie und folglich die Aufweitung der Scherschicht minimiert gehalten werden kann.

Gemäß einem Aspekt betrifft die vorliegende Erfindung daher eine Fahrzeugkomponente für ein Fahrzeug, insbesondere ein Schienenfahrzeug für den Hochgeschwindigkeitsverkehr, mit einer Oberfläche, die im Betrieb einer fahrtwindbedingten Luftströmung mit einer lokalen Hauptströmungsrichtung ausgesetzt ist, wobei die Oberfläche einen Ablösebereich aufweist, in dem sich die Luftströmung von der Oberfläche ablöst, und wenigstens ein dem Ablösebereich zugeordnetes Störelement vorgesehen ist, welches zum Einbringen einer Störung in die Luftströmung ausgebildet ist. Das Störelement weist wenigstens eine in die Luftströmung hineinragende Leitfläche auf, wobei die Leitfläche derart ausgebildet und um einen Neigungswinkel zur lokalen Hauptströmungsrichtung geneigt angeordnet ist, dass sie dem auf die Leitfläche auftreffenden Teil der Luftströmung eine quer zur lokalen Hauptströmungsrichtung verlaufende Geschwindigkeitskomponente aufprägt, die stromabwärts des Störelements eine Verwirbelung in der Luftströmung induziert.

Die Neigung der Leitfläche zur lokalen Hauptströmungsrichtung kann grundsätzlich beliebig ausgerichtet sein. So kann die Leitfläche beispielsweise so ausgerichtet sein, dass die Leitfläche nach Art einer von der Oberfläche ausgehenden Rampe sowohl zu der lokalen Flächennormalen der Oberfläche als auch zur lokalen Hauptströmungsrichtung geneigt ist, wodurch allerdings die Aufweitung der Scherschicht begünstigt wird. Vorzugsweise definiert die lokale Flächennormale mit der lokalen Hauptströmungsrichtung eine lokale Normalebene definiert, wobei die Leitfläche dann um den Neigungswinkel zu der lokalen Normalebene geneigt ist. Hierdurch wird die beschriebene Querablenkung in der Haupterstreckungsebene der Scherschicht mit den damit einhergehenden Vorteilen hinsichtlich der geringen Aufweitung der Scherschicht und des geringen Strömungswiderstands erzielt werden kann.

Der Neigungswinkel der Leitfläche kann grundsätzlich beliebig groß gewählt sein, solange zuverlässig eine lokale Verwirbelung in der Scherschicht erzeugt wird. Bei vorteilhaften Varianten der erfindungsgemäßen Fahrzeugkomponente ist vorgesehen, dass der Neigungswinkel 20° bis 70° beträgt, vorzugsweise 30° bis 60° beträgt, weiter vorzugsweise 40° bis 50° beträgt, insbesondere im Wesentlichen 45° beträgt.

Vergleichbares gilt für die Abmessungen der Leitfläche. Auch diese können grundsätzlich beliebig groß gewählt sein, solange zuverlässig eine lokale Verwirbelung in der Scherschicht erzeugt wird. Bevorzugt weist die Leitfläche eine Längenabmessung auf, die 5 mm bis 80 mm beträgt, vorzugsweise 15 mm bis 65 mm beträgt, weiter vorzugsweise 30 mm bis 50 mm beträgt, insbesondere im Wesentlichen 40 mm beträgt. Zusätzlich oder alternativ weist die Leitfläche bevorzugt eine Höhenabmessung auf, die 2 mm bis 10 mm beträgt, vorzugsweise 3 mm bis 8 mm beträgt, weiter vorzugsweise 4 mm bis 6 mm beträgt, insbesondere im Wesentlichen 5 mm beträgt.

Die Leitfläche kann grundsätzlich beliebig gestaltet sein. So kann sie zumindest abschnittsweise gekrümmt und/oder zumindest abschnittsweise eben ausgebildet sein, solange am nachlaufenden Ende der Leitfläche die gewünschte Querablenkung des auftreffenden Teils der Luftströmung erzielt wird. Bevorzugt ist die Leitfläche im Wesentliche eben ausgebildet, da sie sich in diesem Fall besonders einfach herstellen lässt.

Die Leitfläche kann grundsätzlich durch eine beliebige Gestaltung der Fahrzeugkomponente erzielt werden. Bei bevorzugten Varianten der Erfindung ist die Leitfläche an einem finnenartigen Vorsprung der Oberfläche ausgebildet, wobei der finnenartige Vorsprung insbesondere im Wesentlichen prismatisch ausgebildet ist, da er sich dann besonders einfach herstellen lässt.

Bevorzugt weist der finnenartige Vorsprung eine Dickenabmessung auf, die von 2 mm bis 10 mm beträgt, vorzugsweise von 3 mm bis 8 mm beträgt, weiter vorzugsweise von 4 mm bis 6 mm beträgt, insbesondere im Wesentlichen 5 mm beträgt, da hiermit eine besonders günstige Einleitung der lokalen Turbulenzen in die Scherschicht erzielt werden kann, ohne eine starke Aufweitung der Scherschicht zu induzieren.

Bei weiteren Varianten der erfindungsgemäßen Fahrzeugkomponente ist die Leitfläche als Seitenwand einer Einbuchtung der Oberfläche ausgebildet, da sich auch mit einer solchen Gestaltung die gewünschte lokale Querablenkung in dem gewünschten Maß erzielen lässt.

Je nach Größe des Ablösebereiches kann bereits ein einziges Störelement mit einer einzigen Leitfläche oder gegebenenfalls mehreren Leitflächen ausreichen, um die gewünschte Störung in die Scherschicht einzubringen. Bei größeren Ablösebereichen ist jedoch vorzugsweise eine Mehrzahl von Störelementen vorgesehen.

Die Störelemente können grundsätzlich beliebig angeordnet und ausgebildet sein. So ist es insbesondere auch möglich, zumindest einzelne der Störelemente mit von anderen Störelementen abweichender Ausrichtung, abweichendem Abstand und abweichender Gestaltung auszuführen. Hiermit ist es möglich, eine Anpassung an die spezifischen Gegebenheiten der Fahrzeugkomponente hinsichtlich deren Geometrie und/oder Strömungsverhältnisse vorzunehmen.

Vorzugsweise sind die Leitflächen zweier benachbarter Störelemente quer zur lokalen Hauptströmungsrichtung um einen Querabstand beabstandet, der 20 mm bis 100 mm beträgt, vorzugsweise 30 mm bis 80 mm beträgt, weiter vorzugsweise 40 mm bis 60 mm beträgt, insbesondere im Wesentlichen 50 mm beträgt.

Die Leitflächen der Störelemente können grundsätzlich beliebig zueinander ausgerichtet sein. So kann vorgesehen sein, dass die Leitflächen zweier benachbarter Störelemente gegenläufig zur lokalen Hauptströmungsrichtung geneigt sind. Dies hat den Vorteil, dass hiermit eine Gestaltung erzielt werden kann, bei welcher sich die durch die lokale Ablenkung der Strömung bedingten, quer zur Hauptströmungsrichtung auf die Fahrzeugkomponente wirkenden aerodynamischen Kräfte gegenseitig zumindest zum Teil aufheben. Zusätzlich oder alternativ können die Leitflächen zweier benachbarter Störelemente gleichläufig zur lokalen Hauptströmungsrichtung geneigt sein.

Die Verteilung der Störelemente kann wie erwähnt beliebig gewählt sein. Bevorzugt weist die Oberfläche eine Querabmessung quer zu der lokalen Hauptströmungsrichtung auf und die Störelemente sind entlang der Querabmessung der Oberfläche, insbesondere zumindest abschnittsweise gleichmäßig, verteilt angeordnet.

Die erfindungsgemäßen Störelemente lassen sich an beliebigen Fahrzeugkomponenten einsetzen, die einer fahrtwindbedingten Luftströmung ausgesetzt sind. So ist bei bevorzugten Varianten der Erfindung vorgesehen, dass die Oberfläche dazu ausgebildet ist, zumindest einen Teil einer Außenhaut eines Wagenkastens des Fahrzeugs zu bilden. Die Störelemente können dann beispielsweise im Bereich beliebiger Ausnehmungen der Außenhaut eingesetzt werden.

Besonders vorteilhaft ist der Einsatz der erfindungsgemäßen Störelemente im Bereich der Unterseite des Fahrzeugs, insbesondere im Bereich des Fahrwerks. Demgemäß ist die Oberfläche bevorzugt dazu ausgebildet, an einer Unterseite des Wagenkastens angeordnet zu werden, wobei die Oberfläche insbesondere dazu ausgebildet ist, im Bereich eines im Betrieb vorlaufenden Endes eines Fahrwerksausschnitts des Wagenkastens angeordnet zu werden.

Ein weiteres bevorzugtes Einsatzgebiet der erfindungsgemäßen Störelemente liegt im Bereich von dem Fahrzeug hervorstehender Fahrzeugkomponenten. So kann die Fahrzeugkomponente beispielsweise ein Teil eines Stromabnehmers des Fahrzeugs sein, wobei der Stromabnehmer eine Kontakteinrichtung mit einer Kontaktfläche zum Kontaktieren eines Fahrdrahts aufweist und die Oberfläche insbesondere auf einer der Kontaktfläche abgewandten Unterseite der Kontakteinrichtung angeordnet ist. Hiermit ist eine besonders vorteilhafte Reduktion der Schallemission durch solche von dem Fahrzeug hervorstehende Fahrzeugkomponenten möglich.

Die vorliegende Erfindung betrifft weiterhin ein Fahrzeug mit einer erfindungsgemäßen Fahrzeugkomponente. Dabei handelt es sich bevorzugt um ein Fahrzeug für den Hochgeschwindigkeitsverkehr mit einer Nennbetriebsgeschwindigkeit oberhalb von 250 km/h, insbesondere oberhalb von 300 km/h, da hier die Vorteile der Erfindung besonders gut zum Tragen kommen.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigen:
- Figur 1: eine schematische perspektivische Ansicht eines Teils einer bevorzugten Ausführungsform des erfindungsgemäßen Fahrzeugs mit einer bevorzugten Ausführungsform der erfindungsgemäßen Fahrzeugkomponente;
- Figur 2: eine schematische Seitenansicht des Fahrzeugs aus Figur 1;
- Figur 3: eine schematische perspektivische Ansicht der Außenhaut des Fahrzeugs aus Figur 1 im Bereich der Fahrzeugspitze von unten;
- Figur 4: eine schematische Schnittansicht eines Teils der Außenhaut des Fahrzeugs im Bereich der Fahrzeugspitze entlang Linie IV-IV aus Figur 3;
- Figur 5: eine schematische Ansicht des Details V aus Figur 3 von unten;
- Figur 6: eine schematische Schnittansicht des Details entlang Linie VI-VI aus Figur 5;
- Figur 7: eine schematische Schnittansicht eines Teils der Außenhaut einer weiteren bevorzugten Ausführungsform des erfindungsgemäßen Fahrzeugs mit einer weiteren bevorzugten Ausführungsform der erfindungsgemäßen Fahrzeugkomponente Linie VII-VII aus Figur 8;
- Figur 8: eine schematische Ansicht eines Teils der Außenhaut des Fahrzeugs aus Figur 7 von unten;
- Figur 9: eine schematische Ansicht eines Teils einer weiteren bevorzugten Ausführungsform des erfindungsgemäßen Fahrzeugs mit einer weiteren bevorzugten Ausführungsform der erfindungsgemäßen Fahrzeugkomponente von unten;
- Figur 10: eine schematische Rückansicht eines Teils der Fahrzeugkomponente aus Figur 9.

### Erstes Ausführungsbeispiel

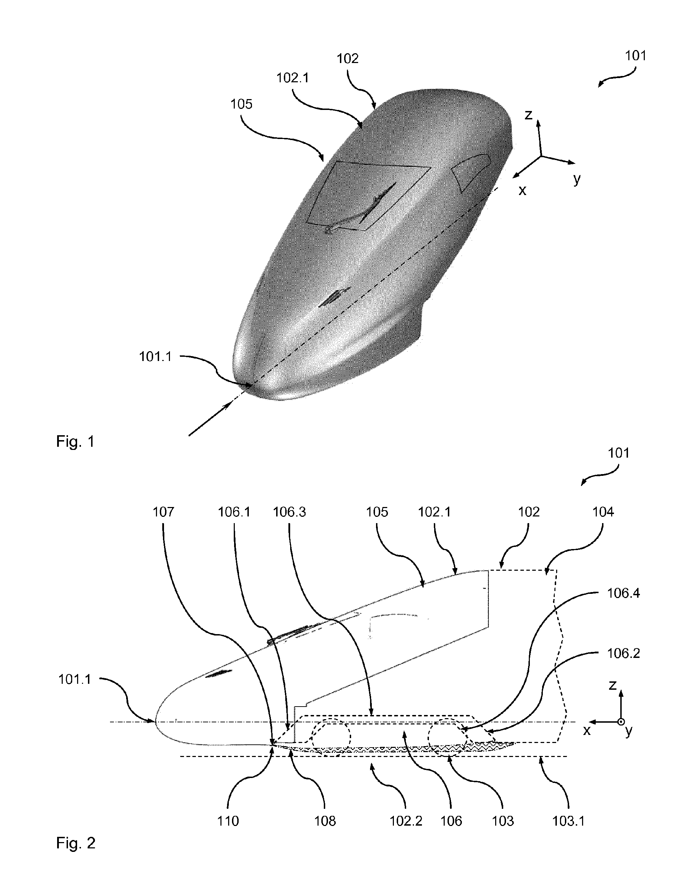

Im Folgenden wird unter Bezugnahme auf die Figuren 1 bis 6 ein erstes bevorzugtes Ausführungsbeispiel des erfindungsgemäßen Fahrzeugs in Form eines Schienenfahrzeugs 101 beschrieben. Bei dem Schienenfahrzeug 101 handelt es sich um einen Endwagen eines Triebzugs für den Hochgeschwindigkeitsverkehr, dessen Nennbetriebsgeschwindigkeit oberhalb von 250 km/h, nämlich bei Vₙ = 300 km/h, liegt.

Es sei an dieser Stelle angemerkt, dass die nachfolgenden Ausführungen für einen Strömungszustand bei Fahrt des Fahrzeugs 101 mit konstanter Geschwindigkeit im geraden ebenen Gleis ohne die Einflüsse von Seitenwind oder dergleichen gemacht werden, sofern keine expliziten anderweitigen Angaben gemacht werden. Es versteht sich, dass sich bei einer Abweichung von diesem Betriebszustand (beispielsweise infolge einer Kurvenfahrt oder von Seitenwind etc.) Abweichungen von den beschriebenen Strömungsverhältnissen, insbesondere den Strömungsrichtungen ergeben können, wobei jedoch die grundsätzlichen Feststellungen im Wesentlichen weiterhin gelten.

Das Fahrzeug 101 umfasst einen Wagenkasten 102, der eine Außenhaut 102.1 des Fahrzeugs 101 definiert. Der Wagenkasten 102 ist im Bereich seiner beiden Enden in herkömmlicher Weise jeweils auf einem Fahrwerk in Form eines Drehgestells 103 abgestützt ist. Es versteht sich jedoch, dass die vorliegende Erfindung auch in Verbindung mit anderen Konfigurationen eingesetzt werden kann, bei denen der Wagenkasten lediglich auf einem Fahrwerk abgestützt ist.

Zum einfacheren Verständnis der nachfolgenden Erläuterungen ist in den Figuren ein (durch die Radaufstandsebene 103.1 des Drehgestells 103 vorgegebenes) Fahrzeug-Koordinatensystem x,y,z angegeben, in dem die x-Koordinate die Längsrichtung des Schienenfahrzeugs 101, die y-Koordinate die Querrichtung des Schienenfahrzeugs 101 und die z-Koordinate die Höhenrichtung des Schienenfahrzeugs 101 bezeichnen.

Der Wagenkasten 102 weist einen Rumpfabschnitt 104 und einen daran anschließenden Kopfabschnitt 105 auf, der ein bevorzugtes Ausführungsbeispiel der erfindungsgemäßen Fahrzeugkomponente darstellt.

Der Rumpfabschnitt 104 weist (abgesehen von lokalen Ausschnitten für funktionale Komponenten des Fahrzeugs, wie beispielsweise Stromabnehmer, Dachcontainer etc.) eine im Wesentlichen prismatische Gestaltung (mit entlang der Fahrzeuglängsrichtung im Wesentlichen identischen Schnittkonturen der Außenhaut 102.1) auf.

Demgegenüber verjüngt sich der Kopfabschnitt 105 sowohl in Fahrzeughöhenrichtung als auch in Fahrzeugquerrichtung zum Ende des Fahrzeugs 101 hin, sodass er im Betrieb des Fahrzeugs 101 ein freies Fahrzeugende des Fahrzeugs 101 bilden kann. Dabei ist in dem Kopfabschnitt 105 ein Abteil für den Fahrzeugführer vorgesehen, von dem aus der Fahrzeugführer das Fahrzeug 101 steuert, wenn der Kopfabschnitt 105 in einem Normalbetrieb des Fahrzeugs 101 das vorlaufende Ende 101.1 des Fahrzeugs 101 bildet

(also die Fahrtrichtung in Richtung der positiven x-Achse weist, wovon im Folgenden ausgegangen wird, soweit keine expliziten anderweitigen Angaben gemacht werden).

Das Drehgestell 103 ist in einem Fahrwerksausschnitt 106 des Wagenkastens 102 angeordnet, der an seinem vorlaufenden Ende durch eine vorlaufende Wand 106.1 und an seinem nachlaufenden Ende durch eine nachlaufende Wand 106.2 begrenzt ist, die durch eine obere Wand 106.3 miteinander verbunden sind. Zu beiden Fahrwerksseiten wird der Fahrwerksausschnitt 106 durch Schürzen 106.4 begrenzt.

Am unteren Ende der vorlaufenden Wand 106.1 bildet die Außenhaut 102.1 des Wagenkastens 102 in diesem Betriebsmodus einen Ablösebereich in Form einer Strömungsabrisskante 107 aus, an der sich der (die Unterseite 102.2 des Wagenkastens 102 vom freien Fahrzeugende zum Fahrwerksausschnitt 106 hin überstreichende) Luftstrom von der Außenhaut 102.1, also der Oberfläche des Wagenkastens 102 ablöst. Die Strömungsabrisskante 107 ist dabei in der Fahrzeuglängsrichtung in einem Abrisskantenabstand DA von dem freien Fahrzeugende 101.1 entfernt angeordnet (siehe Figur 2).

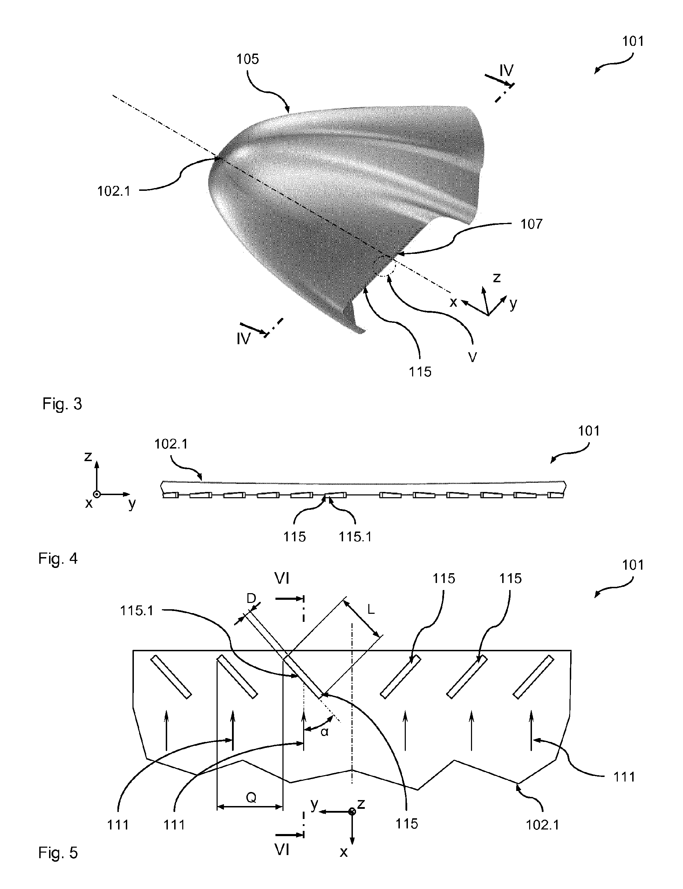

Die Strömungsabrisskante 107 ist im vorliegenden Beispiel im Wesentlichen geradlinig ausgebildet (siehe insbesondere Figur 3). Es versteht sich jedoch, dass die Strömungsabrisskante bei anderen Varianten der Erfindung einen beliebigen geeigneten Verlauf (z. B. zumindest abschnittsweise geradlinig und/oder zumindest abschnittsweise gekrümmt) aufweisen kann.

Nach dem Ablösen des Luftstroms bildet sich infolge der unterschiedlichen Strömungsgeschwindigkeiten im dem Fahrwerksausschnitt 106 und dem darunter liegenden Zwischenraum zum Gleisbett eine so genannte Scherschicht 103 aus. Die Strömungsverhältnisse innerhalb der Scherschicht 108 sind wegen der Geschwindigkeitsunterschiede stark instabil, sodass es neben einem Aufweiten der Scherschicht 103 in Fahrzeughöhenrichtung (z-Richtung) im weiteren Strömungsverlauf zu einem periodischen Aufrollen von Wirbeln kommt.

Diese periodische Wirbelbildung bedingt bei herkömmlichen Fahrzeugen eine wesentliche Schallemission in diesem Fahrzeugbereich. Verstärkt wird dies noch durch das Auftreffen dieser Wirbel auf nachlaufende Fahrzeugkomponenten, insbesondere Komponenten des Drehgestells, vor allen Dingen aber der nachlaufenden Wand des Fahrwerksausschnitts. Diese Komponenten werden hierdurch zu Schwingungen und damit ebenfalls zur Schallemission angeregt.

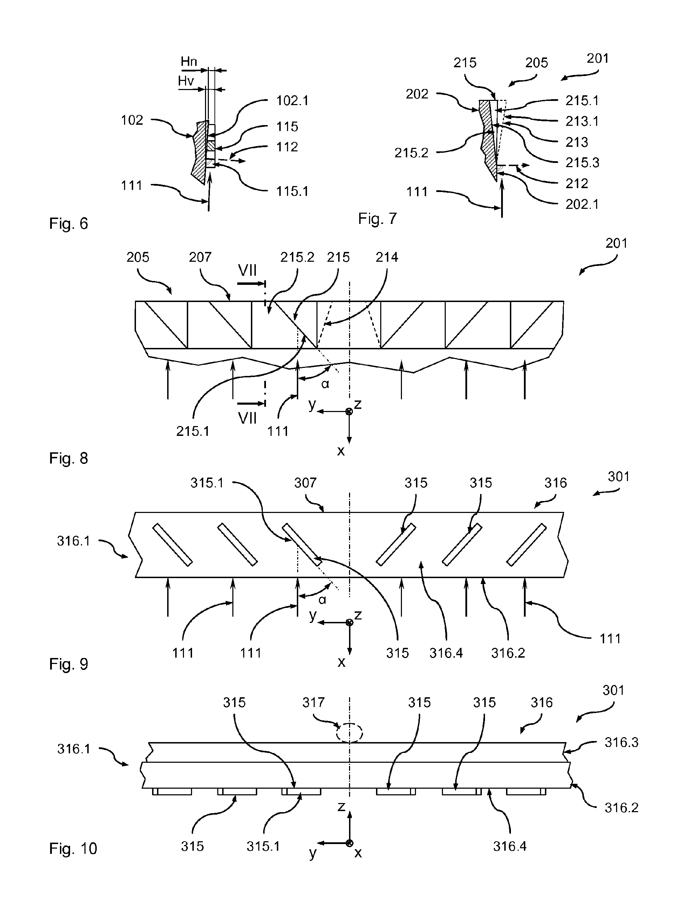

Um diese Schallemission zu reduzieren weist das erfindungsgemäße Kopfmodul 105 auf seiner Unterseite in der Fahrzeuglängsrichtung zwischen dem freien Fahrzeugende 101.1 und der Strömungsabrisskante 107 eine Strömungsleiteinrichtung 109 auf. Die Strömungsleiteinrichtung 109 prägt dem Luftstrom im Bereich der Strömungsabrisskante 107 über einen Ablenkungsbereich 110 jeweils eine nach unten gerichtete lokale Hauptströmungsrichtung 111 auf, die um einen Winkel α = 6° zur Fahrzeuglängsrichtung geneigt ist (siehe insbesondere Figur 6), wobei Winkelabweichungen von bis zu + 1° möglich sind.

Hierdurch wird in vorteilhafter Weise erreicht, dass auch die Scherschicht 108 nach unten abgelenkt wird (siehe Figur 2) und somit, sofern überhaupt, bei der Nennbetriebsgeschwindigkeit des Fahrzeugs 101, über höchstens 10% ihrer lokalen Höhenerstreckung auf das Drehgestell 103 auftrifft. Im weiteren Strömungsverlauf wird hierdurch erreicht, dass die Scherschicht 108 über höchstens 20% ihrer lokalen Höhenerstreckung, auf die nachlaufende Wand 106.2 des Fahrwerksausschnitts 106 auftrifft. Beide Effekte bewirken die erwähnte Reduktion der Schwingungsanregung dieser Fahrzeugkomponenten und der hierdurch induzierten Schallemission.

Es versteht sich, dass die Ablenkung der Hauptströmungsrichtung 111 nach unten grundsätzlich beliebig groß gewählt werden kann, um den beschriebenen Effekt zu erzielen. Insbesondere kann der Winkel α über die Fahrzeugbreite (also in Fahrzeugquerrichtung) variieren, um eine entsprechende Abstimmung bzw. Anpassung hinsichtlich der nachfolgenden Fahrzeugkomponenten zu erzielen. Besonders günstig ist es jedoch, wenn die Strömung nicht zu weit nach unten in Richtung des Gleisbettes abgelenkt wird, um ungünstige Effekte, wie beispielsweise eine Erhöhung des Strömungswiderstandes, das Auslösen von Schotterflug etc., soweit als möglich zu vermeiden.

Im Bereich der Strömungsabrisskante 107 sind zu beiden Seiten der Längsmittenebene (xz-Ebene) jeweils 17 Störelemente in Form von Turbulatorelementen 115 angeordnet. Diese Turbulatorelemente 115 dienen zur Einbringung von Verwirbelungen in die sich nach dem Strömungsabriss an der Strömungsabrisskante 107 ausbildende Scherschicht 108. Hiermit wird der eingangs beschriebene Vorteil der Vermeidung von Geräuschemissionen durch die periodische Bildung von Wirbeln innerhalb der Scherschicht 108 erzielt.

Wie insbesondere den Figuren 3 bis 6 zu entnehmen ist, ist jedes Turbulatorelement 115 als kurzer finnenartiger oder rippenartiger Vorsprung an der Unterseite der Außenhaut 102.1 ausgebildet. Das jeweilige Turbulatorelement 115 weist eine zur Fahrzeuglängsrichtung (x-Richtung) und zur Fahrzeugquerrichtung (y-Richtung) geneigt angeordnete Leitfläche 115.1 auf. Die in Wesentlichen eben ausgeführte Leitfläche 115.1 ragt in den Luftstrom hinein, sodass ein Teil des Luftstroms mit der zur Fahrzeuglängsmittenebene (xz-Ebene) parallelen lokalen Hauptströmungsrichtung 111 auf die Leitfläche 115.1 auftrifft und von dieser in Fahrzeugquerrichtung abgelenkt wird.

Die Leitfläche 115.1 ist um einen Neigungswinkel α zu einer lokalen Normalebene geneigt, die durch die lokale Flächennormale 112 der (durch die Außenhaut 102.1 gebildeten) Oberfläche und die lokale Hauptströmungsrichtung 111 aufgespannt bzw. definiert wird. Hierdurch wird eine Querablenkung des auf die Leitfläche 115.1 auftreffenden Teils der Strömung in der Haupterstreckungsebene der Scherschicht 108 erzielt (wobei die Haupterstreckungsebene der Scherschicht 108 durch die lokalen Hauptströmungsrichtungen 111 aufgespannt bzw. definiert wird). Wie vorstehend bereits beschrieben wurde, ist diese primär innerhalb der Haupterstreckungsebene wirkende Querablenkung hinsichtlich einer geringen Aufweitung der Scherschicht 108 in der Fahrzeughöhenrichtung (z-Richtung) und des geringen Strömungswiderstands von Vorteil.

Der Neigungswinkel α zur lokalen Normalebene, mithin also auch zur lokalen Hauptströmungsrichtung 111, ist so gewählt, dass dem auf die Leitfläche auftreffenden Teil der Luftströmung eine quer zur lokalen Hauptströmungsrichtung 111 verlaufende Geschwindigkeitskomponente aufprägt, die in der Scherschicht 108 stromabwärts des Turbulatorelements 115 eine Verwirbelung in der Luftströmung induziert.

Der Neigungswinkel α der Leitfläche kann grundsätzlich beliebig groß gewählt sein, solange zuverlässig eine lokale Verwirbelung in der Scherschicht 108 erzeugt wird. Im vorliegenden Beispiel beträgt der Neigungswinkel im Wesentlichen α = 45°, da hiermit eine ausreichend starke Querablenkung der lokalen Strömung erzielt wird, die zuverlässig die gewünschte lokale Verwirbelung in der Scherschicht 108 erzeugt.

Im vorliegenden Beispiel weist die Leitfläche 115.1 eine Längenabmessung L auf, die im Wesentlichen L = 40 mm beträgt. Weiterhin weist der finnen- bzw. rippenartige Vorsprung 115 am denen die Leitfläche 115.1 ausgebildet ist, eine Dickenabmessung auf, die im Wesentlichen D = 5 mm beträgt. Die Dickenabmessung ist über die Länge des Vorsprungs 115 im Wesentlichen konstant, sodass sich eine besondere einfach herzustellende Geometrie ergibt.

Schließlich weist die Leitfläche 115.1 eine mittlere Höhenabmessung Hm auf, die im Wesentlichen Hm = 6,5 mm beträgt, wobei die Höhenabmessung H zwischen Hn = 5 mm (am nachlaufenden Ende) und Hv = 8 mm (am vorlaufenden Ende) variiert. Es versteht sich jedoch, dass die Leitfläche bei anderen Varianten der Erfindung auch eine konstante Höhenabmessung H aufweisen kann, die beispielsweise H = 5 mm entspricht. Im einfachsten Fall ist die Leitfläche dann an einer prismatischen Rippe konstanter Dicke und Höhe ausgebildet.

Die Leitfläche 111 ist wie erwähnt im vorliegenden Beispiel im Wesentlichen eben ausgeführt. Es versteht sich jedoch, dass sie bei anderen Varianten der Erfindung auch zumindest abschnittsweise gekrümmt ausgebildet sein kann, solange am nachlaufenden Ende der Leitfläche die gewünschte Querablenkung des auftreffenden Teils der Luftströmung erzielt wird.

Im vorliegenden Beispiel sind die Leitflächen 115.1 zu beiden Seiten der Fahrzeuglängsmittenebene in Fahrzeugquerrichtung im Wesentlichen gleichmäßig verteilt, wobei die Leitflächen 115.1 zweier benachbarter Turbulatorelemente 115 zu beiden Seiten der Fahrzeuglängsmittenebene quer zur lokalen Hauptströmungsrichtung um einen Querabstand beabstandet, der im Wesentlichen Q = 50 mm beträgt. Hierdurch wird erreicht, dass die Turbulatorelemente 115 einander in Fahrzeugquerrichtung bzw. quer zur Hauptströmungsrichtung 111 nicht überdecken, sodass ein Teil der Luftströmung zunächst ohne Ablenkung zwischen ihnen hindurch strömen kann. Dieser nicht abgelenkte Teil trifft dann jedoch auf den durch die Leitfläche 115.1 abgelenkten Teil der Luftströmung, dessen Geschwindigkeitskomponente quer zur Hauptströmungsrichtung 111 dann die gewünschte lokale Turbulenz in der Luftströmung induziert.

Wie den Figuren 3 bis 5 zu entnehmen ist, sind die Leitflächen 115.1 jeweils auf einer Seite der Fahrzeuglängsmittenebene gleichläufig zu der lokalen Normalebene (mithin also auch zur lokalen Hauptströmungsrichtung 111) geneigt. Demgegenüber sind die Leitflächen 115.1 auf den beiden Seiten der Fahrzeuglängsmittenebene gegenläufig zu der lokalen Normalebene (mithin also auch zur lokalen Hauptströmungsrichtung 111) geneigt. Dies hat zum einen den Vorteil, dass ein im wesentlichen symmetrisches Strömungsbild entsteht. Zum anderen hat dies den Vorteil, dass sich die durch die lokale Ablenkung der Strömung bedingten, quer zur Hauptströmungsrichtung 111 auf den Wagenkasten 102 wirkenden aerodynamischen Kräfte gegenseitig im Wesentlichen aufheben.

Es versteht sich jedoch, dass bei anderen Varianten der Erfindung auch vorgesehen sein kann, dass die paarweise und/oder gruppenweise gegenläufig ausgerichtet sind, um diesen Effekt zu erzielen.

### Zweites Ausführungsbeispiel

Eine weitere vorteilhafte Ausführung des erfindungsgemäßen Fahrzeugs 201 mit einem weiteren bevorzugten Ausführungsbeispiel der erfindungsgemäßen Fahrzeugkomponente in Form eines Kopfmoduls 205 wird im Folgenden unter Bezugnahme auf die Figuren 1 bis 3, 7 und 8 beschrieben. Das Fahrzeug 201 entspricht dabei in seiner grundsätzlichen Gestaltung und Funktionsweise dem Fahrzeug 101 aus den Figuren 1 bis 6, sodass hier lediglich auf die Unterschiede eingegangen werden soll. Insbesondere sind gleichartige Komponenten mit um den Wert 100 erhöhten Bezugszeichen versehen. Sofern nachfolgend nichts Anderweitiges ausgeführt wird, wird hinsichtlich der Merkmale, Funktionen und Vorteile dieser Komponenten auf die obigen Ausführungen im Zusammenhang mit dem ersten Ausführungsbeispiel verwiesen.

Die Figur 7 zeigt einen Schnitt durch das Kopfmodul 205, der dem Schnitt aus Figur 6 entspricht, während die Figur 8 eine Ansicht zeigt, welche der Ansicht aus Figur 5 entspricht.. Der einzige Unterschied zu der Ausführung aus den Figuren 1 bis 6 besteht darin, dass die Leitfläche 215.1 durch eine Seitenwand einer Ausnehmung 215.2 in dem Wagenkasten 202 gebildet ist. Auch hier ist die Leitfläche 215.1 aber wiederum um den Neigungswinkel a = 45° zur lokalen Normalebene geneigt, die durch die lokale Flächennormale 212 (der durch die Außenhaut 202.1 gebildeten Oberfläche) und die lokale Hauptströmungsrichtung 111 aufgespannt bzw. definiert wird.

Der Grund 215.3 der Ausnehmung 215.2 verläuft dabei unter einem ausreichend flachen Winkel zu der Außenhaut 201.1, sodass die Luftströmung sich am Übergang in die Ausnehmung 215.2 noch nicht von der Oberfläche löst und somit in die Ausnehmung 215.2 einströmt, wo sie dann durch die Leitfläche 215.1 in der beschriebenen Weise quer zur Hauptströmungsrichtung 111 abgelenkt wird.. Hierdurch wird eine Querablenkung des auf die Leitfläche 115.1 auftreffenden Teils der Strömung erzielt, die nach wie vor im Wesentlichen in der Haupterstreckungsebene der Scherschicht 108 erzielt (wobei die Haupterstreckungsebene der Scherschicht 108 durch die lokalen Hauptströmungsrichtungen 111 aufgespannt bzw. definiert wird). Wie vorstehend bereits beschrieben wurde, ist diese primär innerhalb der Haupterstreckungsebene wirkende Querablenkung hinsichtlich einer geringen Aufweitung der Scherschicht 108 in der Fahrzeughöhenrichtung (z-Richtung) und des geringen Strömungswiderstands von Vorteil.

Weiterhin kann im Bereich der Fahrzeuglängsmittenebene eine Ausnehmung zwei zur lokalen Normalebene geneigten Leitflächen vorgesehen sein, wie dies in Figur 18. die gestrichelten Konturen 214 angedeutet ist.

In einer alternativen Gestaltung können anstelle der Ausnehmung 215.2 nach Art einer Rampe gestaltete Vorsprünge vorgesehen sein, wie sie in Figur 7 durch die gestrichelte Kontur 213 angedeutet sind. Bei diesen Varianten bildet dann die zur Hauptströmungsrichtung 111 geneigte ansteigende Oberfläche 213.1 die Leitfläche, welche die Ablenkung des auf die auftreffenden Teils der Luftströmung bewirkt. Die Rampen 213 können in Fahrzeugquerrichtung eine beliebige geeignete Abmessung aufweisen. Auch die Rampen 213 können eine zur lokalen Normalebene geneigte Seitenfläche ähnlich der Leitfläche 115.1 aus dem ersten Ausführungsbeispiel aufweisen. Diese Seitenflächen können aber auch parallel zur Hauptströmungsrichtung ausgerichtet sein. Auch bei dieser Gestaltung können zwischen den Rampen 213 beliebige geeignete Abstände vorgesehen sein.

### Drittes Ausführungsbeispiel

Eine weitere vorteilhafte Ausführung der erfindungsgemäßen Fahrzeugkomponente in Form eines Stromabnehmers 316 des Fahrzeugs 101 wird im Folgenden unter Bezugnahme auf die Figuren 1 bis 3, 9 und 10 beschrieben. Hinsichtlich ihrer grundsätzlichen Gestaltung, Anordnung und Funktionsweise entsprechen die Störelemente 315 des Stromabnehmers 316 den Störelementen 115 aus den Figuren 1 bis 6, sodass hier lediglich auf die Unterschiede eingegangen werden soll. Insbesondere sind gleichartige Komponenten mit um den Wert 200 erhöhten Bezugszeichen versehen. Sofern nachfolgend nichts Anderweitiges ausgeführt wird, wird hinsichtlich der Merkmale, Funktionen und Vorteile dieser Komponenten auf die obigen Ausführungen im Zusammenhang mit dem ersten Ausführungsbeispiel verwiesen.

Ein Unterschied besteht darin, dass die Störelemente bzw. Turbulatorelemente 315 auf der Unterseite einer Kontakteinrichtung 316.1 des Stromabnehmers 316 angeordnet sind. Genauer gesagt sind die Turbulatorelemente 315 auf der Unterseite eines Trägers 316.2 angeordnet, der die Schleifleiste 316.3 des Stromabnehmers 316 trägt, welche ihrerseits die Oberleitung 317 kontaktiert. Ein weiterer Unterschied besteht darin, dass die Turbulatorelemente 315 als prismatische Elemente mit konstanter Höhenabmessung ausgeführt sind, welche auf die Oberfläche 316.3 des Trägers 316.1 angrenzend an die Strömungsabrisskante 307 aufgesetzt sind. Im Übrigen gelten jedoch die obigen im Zusammenhang mit den Turbulatorelementen 115 gemachten Ausführungen.

Hiermit ist nicht nur eine besonders vorteilhafte Reduktion der Schallemission durch den Stromabnehmer 316 möglich, es werden auch durch die Vermeidung der ausgeprägten Wirbelbildung in der Scherschicht die Vibrationen im Stromabnehmer 316 reduziert.

Die vorliegende Erfindung wurde vorstehend anhand von Beispielen beschrieben, bei denen die Fahrzeugkomponente als Kopfmodul bzw. Stromabnehmer eines Fahrzeugs ausgebildet ist. Es versteht sich jedoch, dass die erfindungsgemäße Fahrzeugkomponente auch eine beliebige andere Komponente sein kann, die einer durch Fahrtwind bedingten Luftströmung ausgesetzt ist.

Die vorliegende Erfindung wurde vorstehend ausschließlich für Beispiele von Fahrzeugen für Triebzüge beschrieben. Es versteht sich jedoch, dass die Erfindung auch im Zusammenhang mit anderen Schienenfahrzeugen zum Einsatz kommen kann.

## Patentansprüche

1. Fahrzeugkomponente für ein Fahrzeug, insbesondere ein Schienenfahrzeug für den Hochgeschwindigkeitsverkehr, mit
- einer Oberfläche (316.3), die im Betrieb einer fahrtwindbedingten Luftströmung mit einer lokalen Hauptströmungsrichtung (111) ausgesetzt ist, wobei
- die Oberfläche (316.3) einen Ablösebereich (307) aufweist, in dem sich die Luftströmung von der Oberfläche (316.3) ablöst, und
- wenigstens ein dem Ablösebereich (307) zugeordnetes Störelement (315) vorgesehen ist, welches zum Einbringen einer Störung in die Luftströmung ausgebildet ist,
**dadurch gekennzeichnet, dass**
- die Oberfläche (316.3) ein Teil eines Stromabnehmers (316) des Fahrzeugs ist und
- das Störelement (315) wenigstens eine in die Luftströmung hineinragende Leitfläche (315.1) aufweist, wobei
- die Leitfläche (315.1) derart ausgebildet und um einen Neigungswinkel zur lokalen Hauptströmungsrichtung (111) geneigt angeordnet ist, dass sie dem auf die Leitfläche (315.1) auftreffenden Teil der Luftströmung eine quer zur lokalen Hauptströmungsrichtung (111) verlaufende Geschwindigkeitskomponente aufprägt, die stromabwärts des Störelements (315) eine Verwirbelung in der Luftströmung induziert.

2. Fahrzeugkomponente nach Anspruch 1, **dadurch gekennzeichnet, dass**
- die Oberfläche (316.3) eine lokale Flächennormale definiert,
- die lokale Flächennormale mit der lokalen Hauptströmungsrichtung (111) eine lokale Normalebene definiert und
- die Leitfläche (315.1) um den Neigungswinkel zu der lokalen Normalebene geneigt ist.

3. Fahrzeugkomponente nach Anspruch 1 oder 2, **dadurch gekennzeichnet, dass** der Neigungswinkel 20° bis 70° beträgt, vorzugsweise 30° bis 60° beträgt, weiter vorzugsweise 40° bis 50° beträgt, insbesondere im Wesentlichen 45° beträgt.

4. Fahrzeugkomponente nach einem der vorhergehenden Ansprüche, **dadurch gekennzeichnet, dass**
- die Leitfläche (315.1) eine Längenabmessung aufweist, die 5 mm bis 80 mm beträgt, vorzugsweise 15 mm bis 65 mm beträgt, weiter vorzugsweise 30 mm bis 50 mm beträgt, insbesondere im Wesentlichen 40 mm beträgt,
oder
- die Leitfläche (315.1) eine Höhenabmessung aufweist, die 2 mm bis 10 mm beträgt, vorzugsweise 3 mm bis 8 mm beträgt, weiter vorzugsweise 4 mm bis 6 mm beträgt, insbesondere im Wesentlichen 5 mm beträgt.

5. Fahrzeugkomponente nach einem der vorhergehenden Ansprüche, **dadurch gekennzeichnet, dass**
- die Leitfläche (315.1) an einem finnenartigen Vorsprung (315) der Oberfläche (316.3) ausgebildet ist, wobei
- der finnenartige Vorsprung (315) insbesondere im Wesentlichen prismatisch ausgebildet ist.

6. Fahrzeugkomponente nach Anspruch 5, **dadurch gekennzeichnet, dass** der finnenartige Vorsprung (315) eine Dickenabmessung aufweist, die von 2 mm bis 10 mm beträgt, vorzugsweise von 3 mm bis 8 mm beträgt, weiter vorzugsweise von 4 mm bis 6 mm beträgt, insbesondere im Wesentlichen 5 mm beträgt.

7. Fahrzeugkomponente nach einem der Ansprüche 1 bis 4, **dadurch gekennzeichnet, dass** die Leitfläche als Seitenwand einer Einbuchtung der Oberfläche ausgebildet ist.

8. Fahrzeugkomponente nach einem der vorhergehenden Ansprüche, **dadurch gekennzeichnet, dass** eine Mehrzahl von Störelementen (315) vorgesehen ist.

9. Fahrzeugkomponente nach Anspruch 8, **dadurch gekennzeichnet, dass** die Leitflächen (315.1) zweier benachbarter Störelemente (315) quer zur lokalen Hauptströmungsrichtung um einen Querabstand beabstandet sind, der 20 mm bis 100 mm beträgt, vorzugsweise 30 mm bis 80 mm beträgt, weiter vorzugsweise 40 mm bis 60 mm beträgt, insbesondere im Wesentlichen 50 mm beträgt.

10. Fahrzeugkomponente nach Anspruch 8 oder 9, **dadurch gekennzeichnet, dass**
- die Leitflächen (315.1) zweier benachbarter Störelemente (315) gegenläufig zur lokalen Hauptströmungsrichtung (111) geneigt sind
und/oder
- die Leitflächen (315.1) zweier benachbarter Störelemente (315) gleichläufig zur lokalen Hauptströmungsrichtung (111) geneigt sind.

11. Fahrzeugkomponente nach einem der Ansprüche 8 bis 10, **dadurch gekennzeichnet, dass**
- die Oberfläche (316.3) eine Querabmessung quer zu der lokalen Hauptströmungsrichtung (111) aufweist und
- die Störelemente (315) entlang der Querabmessung der Oberfläche (316.3), insbesondere zumindest abschnittsweise gleichmäßig, verteilt angeordnet sind.

12. Fahrzeugkomponente nach einem der vorhergehenden Ansprüche, **dadurch gekennzeichnet, dass**
- der Stromabnehmer (316) eine Kontakteinrichtung (316.1) mit einem Kontaktelement (316.3) zum Kontaktieren eines Fahrdrahts (317) aufweist und
- die Oberfläche (316.4) insbesondere auf einer der Kontaktfläche des Kontaktelements (316.3) abgewandten Unterseite der Kontakteinrichtung (316.1) angeordnet ist.

13. Fahrzeug mit einer Fahrzeugkomponente nach einem der vorhergehenden Ansprüche, wobei es insbesondere ein Fahrzeug für den Hochgeschwindigkeitsverkehr mit einer Nennbetriebsgeschwindigkeit oberhalb von 250 km/h, insbesondere oberhalb von 300 km/h, ist.
